(19) Europäisches Patentamt

European Patent Office

Office européen des brevets

(11) **EP 0 746 184 A2**

(12) **EUROPÄISCHE PATENTANMELDUNG**

(43) Veröffentlichungstag:
  **04.12.1996 Patentblatt 1996/49**

(51) Int. Cl.⁶: **H05B 41/00**

(21) Anmeldenummer: **96108541.2**

(22) Anmeldetag: **29.05.1996**

(84) Benannte Vertragsstaaten:
  **AT BE CH DE DK ES FR GB IT LI NL SE**

(30) Priorität: **01.06.1995 DE 29508871 U**

(71) Anmelder:
  • **Römer, Rudolf**
    **D-28355 Bremen (DE)**
  • **Albers, Franz-Josef**
    **28717 Bremen (DE)**

(72) Erfinder:
  • **Römer, Rudolf**
    **D-28355 Bremen (DE)**
  • **Albers, Franz-Josef**
    **28717 Bremen (DE)**

(74) Vertreter: **Eisenführ, Speiser & Partner**
  **Martinistrasse 24**
  **28195 Bremen (DE)**

(54) **Schaltungsanordnung zum energiesparenden Betrieb von elektrischen Verbrauchern**

(57)  Die Erfindung betrifft eine Schaltungsanordnung zum Betrieb von elektrischen Verbrauchern, insbesondere einer elektrischen Beleuchtung, mit mindestens einer ersten und einer zweiten Induktivität (W1, W2), die in einem ersten Betriebsmodus derart miteinander gekoppelt und zwischen einer Spannungsversorgung (L) und dem elektrischen Verbraucher (V) geschaltet sind, daß von der Spannungsversorgung (L) an den elektrischen Verbraucher (V) eine Spannung ($U_V$) übertragen wird, die um einen bestimmten Betrag ($U_\Delta$) gegenüber der von der Spannungsversorgung bereitgestellten Spannung ($U_{Netz}$) herabgesetzt ist. Das besondere an der Erfindung besteht darin, daß eine Schalteinrichtung (S4, S5) vorgesehen ist, die wahlweise die ersten und zweiten Induktivitäten (W1, W2) in einem zweiten Betriebsmodus parallel zueinander in Reihe zwischen die Spannungsversorgung (L) und den elektrischen Verbraucher (V) schalten.

Fig. 1

## Beschreibung

Die Erfindung betrifft eine Schaltungsanordnung zum Betrieb von elektrischen Verbrauchern, insbesondere einer elektrischen Beleuchtung, mit mindestens einer ersten und einer zweiten Induktivität, die in einem ersten Betriebsmodus derart miteinander gekoppelt und zwischen einer Spannungsversorgung und dem elektrischen Verbraucher geschaltet sind, daß von der Spannungsversorgung an den elektrischen Verbraucher eine Spannung übertragen wird, die um einen bestimmten Betrag gegenüber der von der Spannungsquelle bereitgestellten Spannung herabgesetzt ist.

Eine solche Schaltungsanordnung wird gewöhnlich zum energiesparenden Dauerbetrieb von elektrischen Verbrauchern und insbesondere von elektrischer Beleuchtung verwendet, wobei die an den Verbrauchern anliegende Spannung gewöhnlich um 10% gegenüber der von der Spannungsquelle bereitgestellten Spannung herabgesetzt wird. Mit einer solchen Schaltung wird die untere Grenze der üblicherweise im Hinblick auf die Netzspannungschwankungen ausgelegten Leistungsbandbreite der elektrische Verbraucher ausgenutzt, ohne daß es allerdings zu einer merklichen Leistungsreduzierung kommt. Dabei können nicht unerhebliche Energiespareffekte erzielt werden. Die Reduzierung der Spannung erfolgt mit Hilfe eines Transformators, der zwischen die Spannungsversorgung und die elektrischen Verbraucher geschaltet ist und von der ersten und der zweiten Induktivität gebildet wird.

Eine Schaltungsanordnung der eingangs genannten Art ist beispielsweise in der EP 0 150 237 A1 beschrieben. Diese bekannte Schaltungsanordnung ist zum Betrieb einer Hochdruck-Entladungslampe an einer Batterie vorgesehen, wobei die Batterie-Spannung durch einen Transistor-Spannungswandler und einen nachgeschalteten Transformator in die Speise-Spannung für die Entladungslampe umgesetzt wird. Die Sekundärwicklung des Transformators ist für die Erzeugung der Betriebsspannung für das der Hochdruck-Entladungslampe parallelgeschaltete Zündgerät ausgelegt, und die Sekundärwicklung enthält eine Anzapfung zum Abgreifen der gegenüber der Betriebsspannung für das Zündgerät niedrigeren Betriebsspannung für die Entladungslampe, wobei Mittel für die Betätigung eines Umschalters vorgesehen sind, die nach dem Zünden der Entladungslampe die Speisespannung von der Betriebsspannung für das Zündgerät auf die Brennspannung für die Entladungslampe umschalten. Somit wird nach dem Einschalten und Starten der Entladungslampe ein Teil der Sekundärwicklung des Transformators abgeschaltet. Gerade im Fall größerer Leistungen kann jedoch beim Abschalten ein Lichtbogen entstehen, der den Umschalter zerstören kann. Um dies zu verhindern, muß der Umschalter als Hochleistungsschalter ausgelegt sein, welcher allerdings einen hohen konstruktiven Aufwand erfordert und somit die gesamte Schaltungsanordnung erheblich verteuert.

Aus der FR 1 479 474 ist eine Schaltungsanordnung zum Betrieb einer Xenon-Lichtbogenentladungsröhre bekannt. Bei dieser bekannten Schaltungsanordnung ist ein Spartransformator zur Herabsetzung der von der Spannungsquelle bereitgestellten Spannung vorgesehen und wird beim Einschalten der Xenon-Lichtbogenentladungsröhre die Sekundärspannung des Spartransformators um eine Zusatzspannung erhöht. Diese Zusatzspannung wird von einer Sekundärwicklung eines zweiten Transformators erzeugt, der mit seiner Primärwicklung in gleicher Weise wie der Spartransformator an ein Spannungsversorgungsnetz geschaltet ist. Nach dem Einschalten der Röhre wird die Primärwicklung des zweiten Transformators durch einen Schalter von der Netzspannung getrennt. Die Primärwicklung des zweiten Transformators läuft also leer, wodurch die Sekundärwicklung für den durch diese zur Röhre fließenden Strom eine hohe Impedanz bildet. Diese hohe Impedanz verursacht allerdings nicht nur eine unerwünschte Erwärmung, sondern auch höhere Verluste, wodurch ein Teil der ursprünglich erzielten Energieeinsparung wieder verlorengeht.

In der EP 0 289 542 B1 ist eine ähnliche Schaltungsanordnung beschrieben, die sich jedoch von der zuvor erwähnten bekannten Schaltungsanordnung dadurch unterscheidet, daß die Sekundärwicklung des zweiten Transformators im Normalbetieb eine ausreichend vernachlässigbare Impedanz für den Stromfluß vom ersten Transformator zur elektrischen Beleuchtung bildet, was vorzugsweise durch Kurzschließen der Primärwicklung des zweiten Transformators erreicht werden kann. Mit Hilfe dieser Maßnahme können die Leistungsverluste in der Schaltung reduziert werden, kann also relativ lastfrei geschaltet werden und ist außerdem eine unerwünschte Erwärmung nicht so sehr zu befürchten. In der Praxis hat sich jedoch nun herausgestellt, daß im Normalbetrieb trotz kurzgeschlossener Primärwicklung des zweiten Transformators dessen Sekundärwicklung, durch die der Strom von der Sekundärwicklung des ersten Transformators zur elektrischen Beleuchtung fließen muß, immer noch spürbare Verluste erzeugt, da in diesem Betriebsmodus die Sekundärwicklung des zweiten Transformators als ohmschinduktiver Verbraucher wirkt. Somit wird auch bei dieser bekannten Schaltungsanordnung der theoretisch zu erzielende Einsparungseffekt - wenn auch nicht ganz so stark wie bei der Schaltungsanordnung gemäß der EP 0 150 237 A1 - im Ergebnis herabgesetzt. Im übrigen erfordert diese bekannte Schaltungsanordnung wie auch die der EP 0 150 237 A1 nicht zuletzt wegen der zusätzlichen Anordnung eines zweiten Transformators ein hohes Bauvolumen und ein hohes Gewicht und ist außerdem recht aufwendig, was sich nachteilig auf die Herstellungs- und Wartungskosten auswirkt.

Aufgabe der Erfindung ist es daher, die Schaltungsanordnung der eingangs genannten Art in ihrem Aufbau zu vereinfachen und noch verlustärmer zu machen.

Diese Aufgabe wird dadurch gelöst, daß die Schaltungsanordnung der eingangs genannten Art mit einer Schalteinrichtung versehen ist, die wahlweise die ersten und zweiten Induktivitäten in einem zweiten Betriebsmodus parallel zueinander in Reihe zwischen die Spannungsversorgung und den elektrischen Verbraucher schalten.

Demnach bilden im zweiten Betriebsmodus, bei dem es sich in der Regel um den Einschaltvorgang zum Einschalten der elektrischen Verbraucher, beispielsweise zum Zünden der elektrischen Beleuchtung, handelt, die von der erfindungsgemäßen Schalteinrichtung parallel zueinander geschalteten ersten und zweiten Induktivitäten eine resultierende Induktivität, die durch die Schalteinrichtung außerdem in Reihe zwischen die Spannungsversorgung, die beispielsweise aus einer Batterie, einem Generator oder einer sonstigen Spannungsquelle oder auch aus einem Spannungsversorgungsnetz bestehen kann, und den elektrischen Verbraucher geschaltet ist. Demnach stellt die so gebildete resultierende Induktivität eine ohmsch-induktive Last dar, durch die der Strom von der Spannungsversorgung zu den elektrischen Verbrauchern fließt. Dabei sind jedoch die ohmsch-induktiven Verluste derart gering, daß ein merklicher Spannungsabfall nicht auftritt, so daß im zweiten Betriebsmodus an dem elektrischen Verbraucher im wesentlichen die von der Spannungsversorgung bereitgestellte Spannung anliegt. Dies ist insbesondere dann erforderlich, wenn die elektrischen Verbraucher aus Entladungslampen bestehen, die zum Starten die volle Spannung benötigen.

Für den Energiesparbetrieb schaltet dann die erfindungsgemäße Schalteinrichtung die ersten und zweiten Induktivitäten in einen ersten Betriebsmodus um, in dem sie derart miteinander gekoppelt und zwischen der Spannungsversorgung und den elektrischen Verbrauchern geschaltet sind, daß von der Spannungsversorgung an den elektrischen Verbraucher eine Spannung übertragen wird, die um einen bestimmten Betrag gegenüber der von der Spannungsversorgung bereitgestellten Spannung herabgesetzt ist. Die erfindungsgemäße Schalteinrichtung schaltet demnach die ersten und zweiten Induktivitäten zu einem Transformator zusammen, durch den die Spannung für den elektrischen Verbraucher reduziert wird, um die gewünschte Einsparwirkung zu erzielen. Dabei macht sich die Energieeinsparung in vollem Umfang bemerkbar, da im Gegensatz zum Stand der Technik auf dem Strompfad von den zu einem Transformator zusammengeschalteten ersten und zweiten Induktivitäten zu den elektrischen Verbrauchern keine schaltungsbedingten Verluste (beispielsweise durch einen zweiten Transformator) auftreten.

Insbesondere da ein zweiter Transformator und sonstige Schaltungselemente nicht benötigt werden, baut die erfindungsgemäße Schaltungsanordnung nicht nur kleiner, sondern verursacht auch geringere Herstellungs- und Wartungskosten. Auch die Schalteinrichtung braucht im Gegensatz zum Stand der Technik nicht auf besonders hohe Schaltleistungen ausgelegt zu sein, da beim Umschalten der ersten und zweiten Induktivitäten zwischen den ersten und zweiten Betriebsmodi geringere Ströme als der Laststrom geschaltet zu werden brauchen, was sich zusätzlich vorteilhaft auf die Bauform und die Kosten der Schaltungsanordnung auswirkt.

Eine gegenwärtig besonders bevorzugte Ausführung zeichnet sich dadurch aus, daß die ersten und zweiten Induktivitäten einen Spartransformator bilden. Diese Ausführung läßt einen besonders einfachen Aufbau zu und erlaubt auch besonders kleine Schaltleistungen der Schalteinrichtung.

Bei einer Weiterbildung, bei welcher die erste Induktivität mit ihrem ersten Anschluß an die Spannungsversorgung und mit ihrem zweiten Anschluß an den ersten Anschluß der zweiten Induktivität und an dem elektrischen Verbraucher angeschlossen und der zweite Anschluß der zweiten Induktivität im ersten Betriebsmodus gegen Masse geschaltet ist, trennt die Schalteinrichtung im zweiten Betriebsmodus den zweiten Anschluß der zweiten Induktivität von der Masse und schaltet ihn an den ersten Anschluß der ersten Induktivität. Eine solche Ausbildung der Schalteinrichtung hat den Vorteil, daß sie nicht auf hohe Schaltleistungen ausgelegt werden muß, daher einfach aufgebaut sein kann und unkompliziert arbeitet, was sich günstig auf die Kosten auswirkt. Es wird nämlich lediglich die zweite Induktivität geschaltet, welche gegenüber der ersten Induktivität, die zwischen der Spannungsversorgung und dem elektrischen Verbraucher fest verschaltet bleibt, einen um ein Vielfaches höheren ohmsch-induktiven Widerstand besitzt, der den durch die zweite Induktivität fließenden Strom auf einen Bruchteil des durch die erste Induktivität zum elektrischen Verbraucher fließenden Laststroms begrenzt, wodurch nur geringe Schaltleistungen benötigt werden.

Bei einer zweckmäßigen Weiterbildung umfaßt die Schalteinrichtung einen ersten Schalter, der den ersten Anschluß der ersten Induktivität mit dem zweiten Anschluß der zweiten Induktivität verbindet, und einen zweiten Schalter, der den zweiten Anschluß der zweiten Induktivität mit Masse verbindet. Hierzu sollte zweckmäßigerweise eine Steuereinrichtung vorgesehen sein, die bei Übergang vom zweiten in den ersten Betriebsmodus zunächst den ersten Schalter öffnet und anschließend den zweiten Schalter schließt.

Eine bevorzugte Ausführung der Erfindung wird nachfolgend anhand der beilegenden Figuren näher erläutert. Es zeigen:

Figur 1     den Aufbau der Schaltungsanordnung;

Figur 2a     ein Ersatzschaltbild der Schaltungsanordnung beim Zuschalten des elektrischen Verbrauchers an die Netzspannung; und

Figur 2b     ein Ersatzschaltbild der Schaltungsanordnung nach dem Zuschalten des elektrischen Verbrauchers im Energiesparbetrieb.

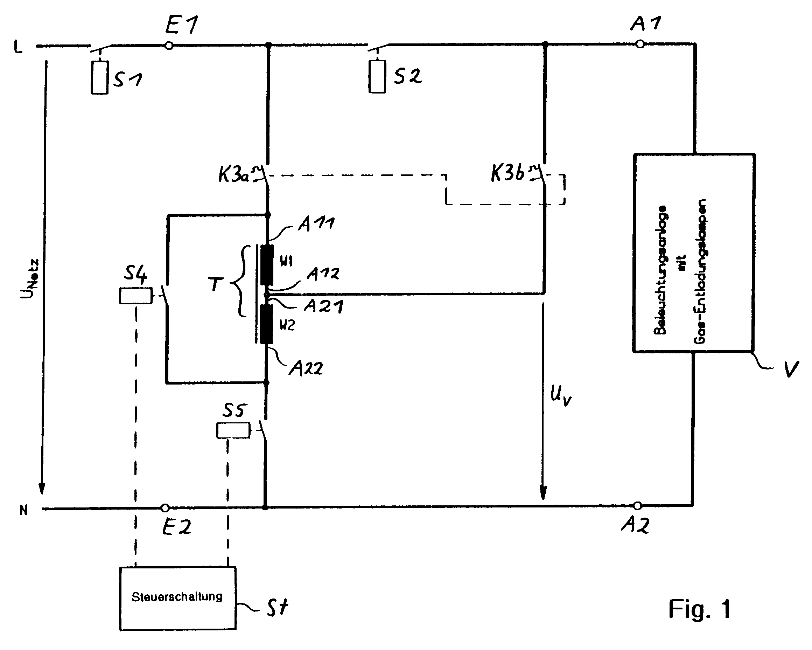

Die in Figur 1 dargestellte Schaltungsanordnug ist mit ihrer einen Eingangsklemme E1 über einen Netzschalter S1 an die Phase L eines nicht näher dargestellten Spannungsversorgungsnetzes und mit ihrer anderen Eingangsklemme E2 an den Nulleiter N bzw. die Masse des Spannungsversorgungsnetzes angeschlossen. An den Ausgangsklemmen A1 und A2 der Schaltungsanordnung ist ein elektrischer Verbraucher V, im dargestellten Ausführungsbeispiel eine Beleuchtungsanlage mit Gas-Entladungslampen, angeschlossen.

Die Ausgangsklemme A1 ist über einen zweiten Schalter S2 mit der Eingangsklemme E1 verbunden, so daß bei geschlossenem zweiten Schalter S2 der elektrische Verbraucher V direkt die Netzspannung $U_{Netz}$ erhält. Üblicherweise ist jedoch der zweite Schalter S2 geöffnet.

An der ersten Eingangsklemme E1 ist über einen Schaltkontakt K3a ein Spartransformator T angeschlossen. Dieser Spartransformator T besteht aus einer ersten Wicklung W1 und einer zweiten Wicklung W2. Die erste Wicklung W1 ist mit ihrem ersten Anschluß A11 an den Schaltkontakt K3a und mit ihrem zweiten Anschluß A12 an den ersten Anschluß A21 der zweiten Wicklung W2 angeschlossen. Der den zweiten Anschluß A12 der ersten Wicklung W1 mit dem ersten Anschluß A21 der zweiten Wicklung W2 verbindende Knoten ist über einen weiteren Schaltkontakt K3b an die erste Ausgangsklemme A1 angeschlossen. Die beiden Schaltkontakte K3a und K3b bilden die Schaltkontakte eines nicht näher gezeigten dritten Schalters.

Es ist ein vierter Schalter S4 vorgesehen, der den zweiten Anschluß A22 der zweiten Wicklung W2 mit dem ersten Anschluß A11 der ersten Wicklung W1 verbindet. Ferner ist ein fünfter Schalter vorgesehen, der den zweiten Anschluß A22 der zweiten Wicklung W2 gegen Masse bzw. an den Nulleiter N schaltet. Der vierte und der fünfte Schalter S4 und S5 werden von einer Steuerschaltung St entsprechend betätigt.

Nachfolgend wird die Betriebsweise der dargestellten Schaltungsanordnung beschrieben.

Zur Inbetriebnahme der Schaltungsanordnung muß grundsätzlich der Netzschalter S1, der im übrigen im wesentlichen nur aus Sicherheitsgründen vorgesehen ist, geschlossen werden. Soll der elektrische Verbraucher V nicht im Energiesparmodus betrieben werden, so kann der zweite Schalter S2 geschlossen werden, wodurch der Spartransformator T überbrückt wird. Für die nachfolgende Betrachtung bleibt jedoch der zweite Schalter S2, der im übrigen auch wahlweise weggelassen werden kann, geöffnet. Schließlich müssen für den Betrieb der Schaltungsanordnung auch die Kontakte K3a und K3b des nicht näher dargestellten dritten Schalters geschlossen sein, der vorzugsweise aus Sicherheitsgründen als Leistungsselbstschalter vorgesehen ist, im Zweifel aber auch weggelassen werden kann.

Für die nachfolgenden Betrachtungen wird ferner angenommen, daß das Verhältnis der ohmsch-induktiven Impedanzen der beiden Wicklungen W1 und W2 1:9 beträgt, also

$$W1/W2 = 1/9 \qquad (1)$$

Außerdem beträgt im dargestellten Ausführungsbeispiel die Effektivspannung der Phase L 230 V.

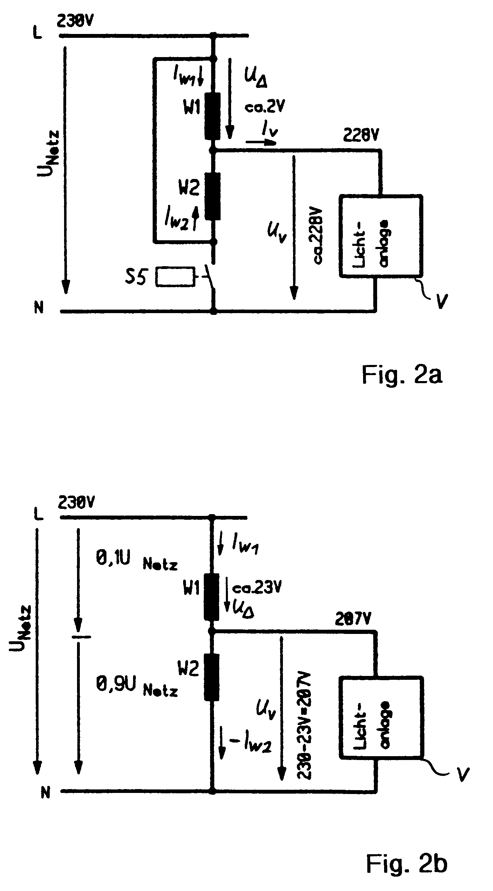

Soll nun der elektrische Verbraucher V durch Schließen des Netzschalters S1 an das Spannungsversorgungsnetz geschaltet werden, so betätigt die Steuerschaltung St zuvor die vierten und fünften Schalter S4 und S5 derart, daß der vierte Schalter S4 geschlossen und der fünfte Schalter S5 geöffnet wird. Dadurch wird der zweite Anschluß A22 der zweiten Wicklung W2 mit dem ersten Anschluß A11 der ersten Wicklung W1 verbunden und somit die erste Wicklung W2 parallel zur zweiten Wicklung W1 derart geschaltet, daß die beiden nun parallel geschalteten Wicklungen W1 und W2 wiederum in Reihe zwischen der Phase L des Spannungsversorgungsnetzes und dem elektrischen Verbraucher V liegen. Anschließend wird nun der Netzschalter S1 geschlossen. Die sich nun ergebende Schaltungssituation ist im Ersatzschaltbild gemäß Figur 2a dargestellt, wobei aus Gründen der Übersichtlichkeit nur noch der geöffnete fünfte Schalter S5 gezeigt ist.

Die am elektrischen Verbraucher anliegende Spannung beträgt

$$U_V = U_{Netz} + U_\Delta \qquad (2)$$

Durch die Parallelschaltung der der Wicklungen W1 und W2 ist die Gesamtimpedanz entsprechend reduziert, und zwar aufgrund der Gleichung

$$Wges = \frac{W1 \cdot W2}{W1 + W2} \qquad (3)$$

so daß der Spannungsabfall $U_\Delta$ an der Parallelschaltung der beiden Wicklungen W1 und W2 entsprechend gering ist, im dargestellten Ausführungsbeispiel beispielsweise etwa 2V, mithin vernachlässigbar ist und die Spannung $U_V$ am elektrischen Verbraucher V fast der Netzspannung $U_{Netz}$ entspricht, im dargestellten Ausführungsbeispiel beispielsweise etwa 228V. Somit liegt beim Zuschalten der elektrische Verbraucher V annähernd an der gesamten Netzspannung an, was insbesondere für das Anfahren von elektrischen Motoren oder das Zünden von Gas-Entladungslampen wichtig ist.

Der von der Phase L des Spannungsversorgungsnetzes zum elektrischen Verbraucher V fließende Strom $I_V$ teilt sich entsprechend dem Verhältnis der ohmschinduktiven Impedanzen auf die beiden parallelgeschalteten Wicklungen W1 und W2 auf, so daß sich ergibt

$$I_V = I_{W1} + I_{W2} \qquad (4)$$

Wegen des im vorliegenden Ausführungsbeispiel gewählten Verhältnisses der ohmsch-induktiven Impedanzen der beiden Wicklungen W1 und W2 zueinander (siehe Gleichung (1)) beträgt der durch die zweite Wicklung W2 fließende Strom $I_{W2}$ nur ein Neuntel des durch die erste Wicklung W1 fließenden Stromes $I_{W1}$ und demnach nur ein Zehntel des zum elektrischen Verbraucher V fließenden Stroms $I_V$, so daß sich für $I_{W2}$ ergibt

$$I_{W2} = I_V/10 \qquad (5)$$

Somit fließt auch durch den geschlossenen vierten Schalter S4 nur ein Zehntel des zum elektrischen Verbraucher V fließenden Laststroms $I_V$. Dadurch ist es möglich, den vierten Schalter S4 lediglich auf eine Schaltleistung auszulegen, die nur einen Bruchteil der vom elektrischen Verbraucher V benötigten Leistung bildet. Demnach beträgt im vorliegenden Ausführungsbeispiel die Schaltleistung des vierten Schalters S4 nur ein Zehntel der vom elektrischen Verbraucher benötigten Leistung. Auf diese Weise kann der vierte Schalter S4 in seiner Bauform klein und außerdem kostengünstig ausgeführt werden.

Für den Übergang vom zuvor beschriebenen Einschaltmodus in den Energiesparbetrieb wird nun von der Steuerschaltung der vierte Schalter S4 geöffnet, wodurch der durch die zweite Wicklung W2 fließende Strom $I_{W2}$ unterbrochen wird und sich der durch die erste Wicklung W1 fließende Strom $I_{W1}$ auf den Wert des zum elektrischen Verbraucher V fließenden Laststroms $I_V$ erhöht. Da sich außerdem die im Strompfad liegende ohmsch-induktive Impedanz auf den Wert der ersten Wicklung W1 erhöht, erhöht sich auch entsprechend die Spannungsdifferenz $U_\Delta$ an der erste Wicklung W1. Anschließend schließt die Steuerschaltung St den fünften Schalter S5, wodurch der zweite Anschluß A22 der zweiten Wicklung W2 an den Nulleiter bzw. gegen Masse geschaltet wird, so daß die beiden Wicklungen W1 und W2 jetzt gemeinsam als Spartransformator wirken. Dadurch erhöht sich der Spannungsabfall $U_\Delta$ an der ersten Wicklung W1 weiter, so daß nun das Verhältnis zwischen dem Spannungsabfall $U_\Delta$ an der ersten Wicklung W1 und der am elektrischen Verbraucher V anliegenden Spannung $U_V$, die gleichzeitig auch an der zweiten Wicklung W2 anliegt und somit die Sekundärspannung ist, dem Verhältnis gemäß Gleichung (1) zwischen den ohmsch-induktiven Impedanzen der beiden Wicklungen W1 und W2 entspricht.

Die sich im Energiesparbetrieb ergebende Schaltungssituation ist im Ersatzschaltbild gemäß Figur 2b schematisch dargestellt, wobei aus Gründen der Übersichtlichkeit hier sämtliche Schalter weggelassen worden sind.

Wegen des im vorliegenden Ausführungsbeispiel gewählten Verhältnisses gemäß Gleichung (1) beträgt der Spannungsabfall an der ersten Wicklung W1 etwa 10%, also 23V, und die am elektrischen Verbraucher V anliegende Spannung 90% der Netzspannung $U_{Netz}$, also etwa 207 V. Dieser Wert liegt noch innerhalb der Leistungsbandbreite, auf die gewöhnlich die meisten elektrischen Verbraucher im Hinblick auf mögliche Netzspannungsschwankungen ausgelegt sind, so daß sich die Leistungsminderung im normalen Betrieb kaum bemerkbar macht, jedoch einen nicht unerheblichen Energieeinsparungseffekt bewirkt.

Da der durch die zweite Wicklung W2 fließende Strom $I_{W2}$, um den nun der Laststrom $I_V$ gegenüber dem durch die erste Wicklung W1 fließenden Strom $I_{W1}$ verringert wird, nur ein Bruchteil des Wertes der Ströme $I_{W1}$ bzw. $I_V$ beträgt, kann auch die Schaltleistung des fünften Schalters S5 entsprechend niedrig ausgelegt werden, was hinsichtlich seiner Bauform und der Herstellungs- und Wartungskosten von Vorteil ist.

Soll nun die Schaltungsanordnung vom Energiesparbetrieb gemäß Figur 2b in den Einschaltmodus gemäß Figur 2a zurückgeschaltet werden, so muß die Steuerschaltung St die vierten und fünften Schalter S4 und S5 entsprechend in umgekehrter Reihenfolge betätigen, also zunächst den fünften Schalter S5 öffnen und anschließend den vierten Schalter S4 schließen.

Ein längerer Betrieb im Einschalt-Modus ist insbesondere dann angezeigt, wenn beispielsweise in Spitzenzeiten die Netzspannung $U_{Netz}$ derart absinkt, daß sich die am elektrischen Verbraucher V anliegende reduzierte Spannung $U_V$ für einen Dauerbetrieb als zu niedrig erweisen könnte.

Obwohl das zuvor beschriebene Ausführungsbeispiel einer Schaltungsanordnung mit einem Spartransformator versehen ist, so bedeutet dies jedoch keine Einschränkung im Hinblick auf die Erfindung; vielmehr ist es auch denkbar, die Schaltungsanordnung so auszubilden, daß im Energiesparmodus die beiden Wicklungen einen "normalen" galvanisch getrennten Transformator bilden.

Abschließend sei noch darauf hingewiesen, daß die zuvor beschriebene Schaltungsanordnung im wesentlichen für den Betrieb einer Beleuchtungsanlage mit Gas-Entladungslampen vorgesehen ist. Selbstverständlich ist es auch möglich, andere elektrische Verbraucher wie beispielsweise elektrische Maschinen zu betreiben.

**Patentansprüche**

1. Schaltungsanordnung zum Betrieb von elektrischen Verbrauchern, insbesondere einer elektrischen Beleuchtung, mit mindestens einer ersten und einer zweiten Induktivität (W1, W2), die in einem ersten Betriebsmodus derart miteinander gekoppelt und zwischen einer Spannungsversorgung (L) und dem elektrischen Verbraucher (V) geschaltet sind, daß von der Spannungsversorgung (L) an den elektrischen Verbraucher (V) eine Spannung ($U_V$) übertragen wird, die um einen bestimmten Betrag ($U_\Delta$) gegenüber der von der Spannungsversorgung bereitgestellten Spannung ($U_{Netz}$) herabgesetzt ist,
gekennzeichnet durch eine Schalteinrichtung (S4, S5), die wahlweise die ersten und zweiten Induktivitäten (W1, W2) in einem zweiten Betriebsmodus parallel zueinander in Reihe zwischen die Spannungsversorgung (L) und den elektrischen Verbraucher (V) schalten.

2. Schaltungsanordnung nach Anspruch 1, dadurch gekennzeichnet, daß die ersten und zweiten Induktivitäten (W1, W2) im ersten Betriebsmodus einen Spartransformator (T) bilden.

3. Schaltungsanordnung nach Anspruch 2, wobei die erste Induktivität (W1) mit ihrem ersten Anschluß (A11) an die Spannungsversorgung (L) und mit ihrem zweiten Anschluß (A12) an den ersten Anschluß (A21) der zweiten Induktivität (W2) und an den elektrischen Verbraucher (V) angeschlossen und der zweite Anschluß (A22) der zweite Induktivität (W2) im ersten Betriebsmodus gegen Masse (N) geschaltet ist,
dadurch gekennzeichnet, daß die Schalteinrichtung im zweiten Betriebsmodus den zweiten Anschluß (A22) der zweiten Induktivität (W2) von der Masse (N) trennt und an den ersten Anschluß (A11) der ersten Induktivität (W1) schaltet.

4. Schaltungsanordnung nach Anspruch 3, dadurch gekennzeichnet, daß die Schalteinrichtung einen ersten Schalter (S4), der den ersten Anschluß (A11) der ersten Induktivität (W1) mit dem zweiten Anschluß (A22) der zweiten Induktivität (W2) verbindet, und einen zweiten Schalter (S5), der den zweiten Anschluß (A22) der zweiten Induktivität (W2) mit der Masse (N) verbindet, umfaßt.

5. Schaltungsanordnung nach Anspruch 4, gekennzeichnet durch eine Steuereinrichtung (St), die bei Übergang vom zweiten in den ersten Betriebsmodus zunächst den ersten Schalter (S4) öffnet und anschließend den zweiten Schalter (S5) schließt.

Fig. 1

Fig. 2a

Fig. 2b